# EUROPEAN PATENT APPLICATION

(11) **EP 3 842 340 A1**
(43) Date of publication of application: **30.06.2021**
(21) Application number: 19929926.4
(22) Date of filing: 21.05.2019
(51) Int. Cl.: B64C 27/08, B64C 27/14

(54) **UNMANNED AERIAL VEHICLE**

(71) Applicant: SZ DJI Technology Co., Ltd., Shenzhen, Guangdong 518057 (CN)
(72) Inventor: QIU, Li, Shenzhen, Guangdong 518057 (CN)
(74) Representative: Goddar, Heinz J.
(86) International application number: PCT/CN2019/087763
(87) International publication number: WO 2020/232626

(57) **Abstract**

This application provides an unmanned aerial vehicle, including a central body, a plurality of arms, a plurality of motors, a plurality of propellers, and a plurality of antennas. The plurality of arms is connected to the central body, a motor mounting base is disposed at an end of each arm away from the central body, and the motor mounting base includes a top and a bottom that is opposite to the top. The plurality of motors is respectively mounted on the motor mounting bases of the plurality of arms. The plurality of propellers is respectively connected to the plurality of motors, and the motors are configured to drive the propellers to rotate, to provide power for the unmanned aerial vehicle for flying. The plurality of antennas are respectively disposed on the motor mounting bases of at least two arms in the plurality of arms, the antenna being located on the top of the motor mounting base, where the propeller is located in a position below the motor mounting base, and the antenna is located in a position above the motor mounting base. The unmanned aerial vehicle provided by this embodiment of this application can ensure open space for mounting the antennas, featuring longer flight duration, fewer folding steps, and a higher storage speed.

## Description

### TECHNICAL FIELD

This application relates to remotely controlled unmanned devices, and specifically, to two unmanned aerial vehicles.

### BACKGROUND

Structures such as antennas need to be configured on an unmanned aerial vehicle to implement related functions. For example, a communication antenna and a positioning antenna are configured for communication with a remote control apparatus and determination of a current location of the unmanned aerial vehicle, respectively. Based on experience, it is found that, to work reliably, the antennas basically need to be disposed in outermost positions on the unmanned aerial vehicle. In an existing unmanned aerial vehicle, a propeller and a motor providing power for the propeller are connected to a central body via a motor mounting base and an arm, and an antenna is arranged at a bottom of the motor. However, during flight, the antenna may be blocked and its normal operation may be affected. Although an antenna support may be additionally configured to resolve the problem caused by a blocked antenna, this solution may cause the unmanned aerial vehicle result to have a relatively large structural weight, and a higher structural weight ratio, which directly affects a flight duration of the unmanned aerial vehicle, increases the number of steps needed for folding the unmanned aerial vehicle, and cause inconvenience for storage.

### BRIEF SUMMARY

An objective of this application is to resolve at least one of the technical problems that exist in the prior art or related art.

Therefore, an aspect of this application provides an unmanned aerial vehicle.

Another aspect of this application provides another unmanned aerial vehicle.

In view of this, according to an aspect of this application, an unmanned aerial vehicle is provided and includes a central body, a plurality of arms, a plurality of motors, a plurality of propellers, and a plurality of antennas. The plurality of arms is connected to the central body. A motor mounting base is disposed at an end of each arm away from the central body, and the motor mounting base includes a top and a bottom that is opposite to the top. The plurality of motors is mounted on the motor mounting bases of the plurality of arms, respectively. The plurality of propellers is connected to the plurality of motors, respectively, and the motors are configured to drive the propellers to rotate, to provide power for the unmanned aerial vehicle for flying. The plurality of antennas is disposed on the motor mounting bases of at least two arms in the plurality of arms, respectively, and the antenna is located on the top of the motor mounting base, where the propeller is located in a position below the motor mounting base, and the antenna is located in a position above the motor mounting base.

In the unmanned aerial vehicle provided by this embodiment of this application, the motor mounting base is disposed at an end of the arm away from the central body. The motor mounting base, on one hand, may be configured to mount the motor for driving the propeller, and on the other hand, may provide a stable mounting position for the antenna. Specifically, the antenna is mounted on the top of the motor mounting base and is located in a position above the motor mounting base, and the propeller is located in a position below the motor mounting base. This can ensure open space for mounting the antenna without adding an additional structure, make the antenna less blocked by a structure such as a propeller, and reduce the weight of the unmanned aerial vehicle, so that the unmanned aerial vehicle has longer flight duration, fewer folding steps, and a higher storage speed. Specifically, the motor is mounted on the motor mounting base, and its specific mounting position is not limited. For example, the motor may be located at an end of the motor mounting base that is farthest away from the central body. The propeller is connected to the motor, as long as it is ensured that the propeller is located in a position below the motor mounting base.

In addition, the unmanned aerial vehicle in the technical solution provided by this application may further have the following additional technical features.

In the foregoing technical solution, preferably, the antenna includes at least one of the following: a communication antenna, a positioning antenna, and a ranging antenna.

In this technical solution, the antenna specifically includes at least one of a communication antenna, a positioning antenna, and a ranging antenna. The communication antenna is configured to exchange data with the outside, the positioning antenna is configured to obtain location information of the unmanned aerial vehicle, and the ranging antenna is configured to detect a distance between the unmanned aerial vehicle and a nearby obstacle. Making the antenna less blocked can ensure normal operation of the antenna and facilitate reliable flight of the unmanned aerial vehicle.

In any one of the foregoing technical solutions, preferably, the antenna includes a communication antenna.

In this technical solution, the antenna specifically includes a communication antenna for exchanging data with the outside. Because the communication antenna is located in a position above the motor mounting base, normal operation of the communication antenna can be ensured, and product reliability is improved. In addition, an arrangement requirement of the communication antenna of the unmanned aerial vehicle can be satisfied without adding an additional structure. Therefore, the communication antenna can be arranged in a highly integrated manner, a fuselage weight is also reduced to prolong the flight duration of the unmanned aerial vehicle, the unmanned aerial vehicle has fewer folding steps, and a higher storage speed.

In any one of the foregoing technical solutions, preferably, the plurality of arms includes a front arm, and the communication antenna is disposed on a motor mounting base of the front arm.

In this technical solution, an arrangement position of the communication antenna needs to ensure the integrity of a directivity diagram of the communication antenna, that is, no other blocking structure should exist within coverage of the directivity diagram. Because the communication antenna is disposed on the motor mounting base of the front arm, integrity of the directivity diagram of the communication antenna can be ensured, and smooth communication can be maintained.

In any one of the foregoing technical solutions, preferably, there are a plurality of communication antennas, and the plurality of communication antennas are located on two sides of a roll axis of the unmanned aerial vehicle, respectively.

In this technical solution, there are specifically a plurality of communication antennas, and this helps improve communication capability of the unmanned aerial vehicle. The roll axis is an axis of rotation when the unmanned aerial vehicle rolls left and right (that is, an axis that extends along front and rear directions of the unmanned aerial vehicle). The plurality of communication antennas is located on the two sides of the roll axis of the unmanned aerial vehicle, respectively. This can ensure basically equal strength of communication signals in left and right directions of the unmanned aerial vehicle and ensure normal communication of the unmanned aerial vehicle.

In any one of the foregoing technical solutions, preferably, the plurality of communication antennas is symmetrically disposed relative to the roll axis of the unmanned aerial vehicle.

In this technical solution, the plurality of communication antennas is further defined as being symmetrically disposed relative to the roll axis of the unmanned aerial vehicle. This not only enhances equal strength of communication signals in the left and right directions of the unmanned aerial vehicle, but also enables even weight distribution of the unmanned aerial vehicle and helps ensure flight attitude balance of the unmanned aerial vehicle.

In any one of the foregoing technical solutions, preferably, the plurality of arms includes a front arm and a rear arm that is opposite to the front arm, a part of the communication antennas is disposed on a motor mounting base of the front arm, and another part of the communication antennas are disposed on a motor mounting base of the rear arm.

In this technical solution, disposing all the communication antennas separately on the front arm and the rear arm can expand signal coverage of the communication antennas, ensure that complete directivity diagrams can be obtained in both front and rear directions of the communication antennas, and help enhance communication reliability of the unmanned aerial vehicle.

In any one of the foregoing technical solutions, preferably, there are a plurality of communication antennas, and the plurality of communication antennas are located on two sides of a pitch axis of the unmanned aerial vehicle, respectively.

In this technical solution, there are specifically a plurality of communication antennas, and this helps improve communication capability of the unmanned aerial vehicle. The pitch axis is an axis of rotation when the unmanned aerial vehicle raises or lowers its head (that is, an axis that extends along left and right directions of the unmanned aerial vehicle). The plurality of communication antennas is located on the two sides of the pitch axis of the unmanned aerial vehicle, respectively. This can ensure basically equal strength of communication signals in front and rear directions of the unmanned aerial vehicle and ensure normal communication of the unmanned aerial vehicle.

In any one of the foregoing technical solutions, preferably, the plurality of communication antennas is symmetrically disposed relative to the pitch axis of the unmanned aerial vehicle.

In this technical solution, the plurality of communication antennas is further defined as being symmetrically disposed relative to the pitch axis of the unmanned aerial vehicle. This not only enhances equal strength of communication signals in the front and rear directions of the unmanned aerial vehicle, but also enables even weight distribution of the unmanned aerial vehicle and helps ensure flight attitude balance of the unmanned aerial vehicle.

In any one of the foregoing technical solutions, preferably, there are a plurality of communication antennas, and the plurality of communication antennas are at a same level relative to the central body.

In this technical solution, there are specifically a plurality of communication antennas, and this helps improve communication capability of the unmanned aerial vehicle. Because the plurality of communication antennas are at the same level relative to the central body, a structure of the unmanned aerial vehicle is more compact, and this helps reduce the possibility of the communication antennas being damaged by an external force.

In any one of the foregoing technical solutions, preferably, there are a plurality of communication antennas, and the plurality of communication antennas are symmetrically disposed relative to the central body.

In this technical solution, there are specifically a plurality of communication antennas, and this helps improve communication capability of the unmanned aerial vehicle. The plurality of communication antennas is symmetrically disposed relative to the central body. This not only enhances equal strength of communication signals of the unmanned aerial vehicle in a circumferential direction of the central body, but also enables even weight distribution of the unmanned aerial vehicle and helps ensure flight attitude balance of the unmanned aerial vehicle.

In any one of the foregoing technical solutions, preferably, the unmanned aerial vehicle further includes a conducting wire electrically connected to the communication antenna, the arm is a hollow-tubular structure, and the conducting wire is electrically connected to a control circuit of the central body via the arm after the conducting wire passes through the motor mounting base.

In this technical solution, the communication antenna is electrically connected to the control circuit of the central body by the conducting wire. This can ensure stability and reliability of data exchange between the communication antenna and the control circuit during the flight. The conducting wire specifically passes through the motor mounting base and the hollow-tubular arm and extends to the control circuit of the central body, so that the motor mounting base, the arm, and the central body can wrap the conducting wire. This, on one hand, further improves protection for the conducting wire, and on the other hand, can make an exterior of the unmanned aerial vehicle simple.

In any one of the foregoing technical solutions, preferably, the communication antenna is a line-of-sight communication antenna.

In this technical solution, the communication antenna is specifically a line-of-sight communication antenna. A radio signal needs to be propagated in a straight line between a transmitting end and a receiving end without being blocked, and a radio frequency thereof is between 10 GHz and 66 GHz. Because the line-of-sight communication antenna is disposed in open space above the motor mounting base, signal blocking can be reduced for the communication antenna, and normal operation of the communication antenna is ensured.

In any one of the foregoing technical solutions, preferably, the communication antenna is a Wi-Fi (Wireless Fidelity, wireless local area network) antenna.

In this technical solution, the communication antenna is further defined as a Wi-Fi antenna. This can enhance signal strength of the wireless network and improve the reliability of communication.

In any one of the foregoing technical solutions, preferably, the communication antenna is configured to receive a control signal sent by a ground control terminal, and send, to the ground control terminal, sensing data of a sensor carried by the unmanned aerial vehicle.

In this technical solution, the communication antenna is specifically configured to exchange data with the ground control terminal. On one hand, the communication antenna may receive the control signal to control operation of the unmanned aerial vehicle based on the control signal. On the other hand, the communication antenna may send the sensing data of the sensor. When the sensing data is an operation parameter of the unmanned aerial vehicle, the ground control terminal can conveniently know an operation status of the unmanned aerial vehicle in time, and further perform a corresponding control operation. This can ensure reliable control by the ground control terminal over the unmanned aerial vehicle and improve safety of operation.

In any one of the foregoing technical solutions, preferably, the sensor is an image sensor, and the sensing data is image information.

In this technical solution, the sensor is specifically an image sensor, and the sensing data is specifically image information. In other words, a user may configure an image sensor on the unmanned aerial vehicle, and collect specific image information by virtue of a flight capability of the unmanned aerial vehicle, and the image information is transmitted back to the ground control terminal via the communication antenna. Therefore, an image collection range is expanded.

In any one of the foregoing technical solutions, preferably, the communication antenna is disposed obliquely to or in parallel with a yaw axis of the unmanned aerial vehicle.

In this technical solution, the yaw axis is an axis of rotation when the unmanned aerial vehicle adjusts a course (that is, an axis that extends along up and down directions of the unmanned aerial vehicle). Disposing the communication antenna obliquely to or in parallel with the yaw axis can ensure that the communication antenna has a trend of extending to an upper open space, and this helps ensure integrity of a directivity diagram of the communication antenna.

In any one of the foregoing technical solutions, preferably, the communication antenna is disposed vertically to the top of the motor mounting base.

In this technical solution, the communication antenna is specifically defined as being disposed vertically to the top of the motor mounting base. This can ensure equal strength of communication of the communication antenna in a circumferential direction of the motor mounting base.

In any one of the foregoing technical solutions, preferably, the communication antenna is disposed obliquely to the top of the motor mounting base.

In this technical solution, the communication antenna is specifically defined as being disposed obliquely to the top of the motor mounting base. The communication antenna may be disposed away from other structures of the unmanned aerial vehicle based on a requirement, so that the communication antenna is less blocked.

In any one of the foregoing technical solutions, preferably, the antenna includes a positioning antenna.

In this technical solution, the antenna specifically includes a positioning antenna for obtaining location information of the unmanned aerial vehicle. Because the positioning antenna is located in a position above the motor mounting base, normal operation of the positioning antenna can be ensured, and product reliability is improved. In addition, an arrangement requirement of the positioning antenna of the unmanned aerial vehicle can be satisfied without adding an additional structure. Therefore, the positioning antenna can be arranged in a highly integrated manner, and a fuselage weight is also reduced, so that flight duration of the unmanned aerial vehicle is longer and that the unmanned aerial vehicle has fewer folding steps and a higher storage speed.

In any one of the foregoing technical solutions, preferably, the plurality of arms includes a front arm, and the positioning antenna is disposed on a motor mounting base of the front arm.

In this technical solution, arranging the positioning antenna on the motor mounting base of the front arm can make the positioning antenna less blocked by a front structure and ensure accurate positioning.

In any one of the foregoing technical solutions, preferably, there are a plurality of positioning antennas, and the plurality of positioning antennas are located on two sides of a roll axis of the unmanned aerial vehicle, respectively.

In this technical solution, there are specifically a plurality of positioning antennas, and the plurality of positioning antennas are located on the two sides of the roll axis of the unmanned aerial vehicle, respectively. This can increase spacings between the plurality of positioning antennas, increase radiation angles of the positioning antennas in a horizontal plane, and help improve positioning accuracy of the unmanned aerial vehicle.

In any one of the foregoing technical solutions, preferably, the plurality of positioning antennas is symmetrically disposed relative to the roll axis of the unmanned aerial vehicle.

In this technical solution, the plurality of positioning antennas is further defined as being symmetrically disposed relative to the roll axis of the unmanned aerial vehicle. This not only enhances positioning accuracy of the unmanned aerial vehicle, but also enables even weight distribution of the unmanned aerial vehicle and helps ensure flight attitude balance of the unmanned aerial vehicle.

In any one of the foregoing technical solutions, preferably, the plurality of arms includes a front arm and a rear arm that is opposite to the front arm, a part of the positioning antennas is disposed on a motor mounting base of the front arm, and another part of the positioning antennas are disposed on a motor mounting base of the rear arm.

In this technical solution, disposing all the positioning antennas separately on the front arm and the rear arm can make the positioning antennas less blocked by nearby front and rear structures and ensure accurate positioning.

In any one of the foregoing technical solutions, preferably, there are a plurality of positioning antennas, and the plurality of positioning antennas are located on two sides of a pitch axis of the unmanned aerial vehicle, respectively.

In this technical solution, there are specifically a plurality of communication antennas, and the plurality of positioning antennas are located on the two sides of the pitch axis of the unmanned aerial vehicle, respectively. This can increase spacings between the plurality of positioning antennas, increase radiation angles of the positioning antennas in a horizontal plane, and help improve positioning accuracy of the unmanned aerial vehicle.

In any one of the foregoing technical solutions, preferably, the plurality of positioning antennas is symmetrically disposed relative to the pitch axis of the unmanned aerial vehicle.

In this technical solution, the plurality of positioning antennas is further defined as being symmetrically disposed relative to the pitch axis of the unmanned aerial vehicle. This not only enhances positioning accuracy of the unmanned aerial vehicle, but also enables even weight distribution of the unmanned aerial vehicle and helps ensure flight attitude balance of the unmanned aerial vehicle.

In any one of the foregoing technical solutions, preferably, there are a plurality of positioning antennas, and the plurality of positioning antennas are at a same level relative to the central body.

In this technical solution, there are specifically a plurality of communication antennas, and this helps enhance positioning accuracy of the unmanned aerial vehicle. Because the plurality of positioning antennas is at the same level relative to the central body, a structure of the unmanned aerial vehicle is more compact, and this helps reduce the possibility of the positioning antennas being damaged by an external force.

In any one of the foregoing technical solutions, preferably, there are a plurality of positioning antennas, and the plurality of positioning antennas are symmetrically disposed relative to the central body.

In this technical solution, there are specifically a plurality of communication antennas, and the plurality of communication antennas are symmetrically disposed relative to the central body. This not only helps enhance positioning accuracy of the unmanned aerial vehicle, but also enables even weight distribution of the unmanned aerial vehicle and helps ensure flight attitude balance of the unmanned aerial vehicle.

In any one of the foregoing technical solutions, preferably, the positioning antenna is a real-time differential positioning antenna.

In this technical solution, the positioning antenna is specifically defined as a real-time differential positioning antenna (Real-time Kinematic, RTK antenna). Centimeter-level positioning accuracy can be obtained outdoors in real time. This can satisfy a high-accuracy positioning requirement and expand an application scope of the unmanned aerial vehicle.

In any one of the foregoing technical solutions, preferably, the positioning antenna is configured to receive a positioning signal from a satellite.

In this technical solution, the positioning antenna not directly used for positioning, but used for receiving a positioning signal from a satellite is specifically defined. This can reduce the amount of calculation and consumption of calculation time and help prolong flight duration.

In any one of the foregoing technical solutions, preferably, there are two positioning antennas, and a spacing between the two positioning antennas is greater than 30 cm.

In this technical solution, there are specifically two positioning antennas. Location information may be obtained through calculation with reference to data collected by the two positioning antennas. Defining the spacing between the two positioning antennas as being greater than 30 cm can satisfy a calculation requirement of the positioning antenna and help improve positioning accuracy.

In any one of the foregoing technical solutions, preferably, the unmanned aerial vehicle further includes a conducting wire electrically connected to the positioning antenna, the arm is a hollow-tubular structure, and the conducting wire is electrically connected to a control circuit of the central body via the arm after the conducting wire passes through the motor mounting base.

In this technical solution, the positioning antenna is electrically connected to the control circuit of the central body by the conducting wire. This can ensure stability and reliability of data exchange between the positioning antenna and the control circuit during the flight. The conducting wire specifically passes through the motor mounting base and the hollow-tubular arm and extends to the control circuit of the central body, so that the motor mounting base, the arm, and the central body can wrap the conducting wire. This, on one hand, further improves protection for the conducting wire, and on the other hand, can make an exterior of the unmanned aerial vehicle simple.

In any one of the foregoing technical solutions, preferably, an axis of rotation of the motor is disposed obliquely to a yaw axis of the unmanned aerial vehicle, and the positioning antenna is disposed obliquely to or in parallel with the yaw axis of the unmanned aerial vehicle.

In this technical solution, the axis of rotation of the motor is defined as being disposed obliquely to the yaw axis of the unmanned aerial vehicle, so that a tilt of the propeller can also be generated. This helps a propeller disk of the propeller avoid another structure, and ensures safe operation of the unmanned aerial vehicle. The positioning antenna needs to be disposed upward in arrangement. Because the positioning antenna located on the top of the motor mounting base is disposed obliquely to or in parallel with the yaw axis, it can be ensured that an arrangement requirement of the positioning antenna is satisfied, and accurate positioning is ensured.

In any one of the foregoing technical solutions, preferably, the positioning antenna is disposed vertically to the top of the motor mounting base.

In this technical solution, the positioning antenna is specifically defined as being disposed vertically to the top of the motor mounting base. This can ensure equal signal strength of the positioning antenna in a circumferential direction of the motor mounting base.

In any one of the foregoing technical solutions, preferably, the positioning antenna is disposed obliquely to the top of the motor mounting base.

In this technical solution, the positioning antenna is specifically defined as being disposed obliquely to the top of the motor mounting base. The positioning antenna may be away from other structures of the unmanned aerial vehicle based on a requirement, so that the positioning antenna is less blocked.

In any one of the foregoing technical solutions, preferably, the arm is rotatably connected or fixedly connected to the central body.

In this technical solution, when the arm is rotatably connected to the central body, the arm may be rotated based on a requirement of the antenna, to adjust an antenna angle at any time and ensure that the antenna is not blocked. When the arm is fixedly connected to the central body, stability and reliability of the connection can be fully ensured.

According to another aspect of this application, an unmanned aerial vehicle is provided and includes a central body, an arm, a motor, a propeller, and an antenna, where the arm is connected to the central body; the motor is connected to an end of the arm away from the central body; the propeller is connected to the motor, and the motor is configured to drive the propeller to rotate, to provide power for flying; and the antenna is connected to the end of the arm away from the central body, and disposed opposite to the motor, where the antenna is located in a position above the motor, and the propeller is located in a position below the motor.

In the unmanned aerial vehicle provided by this embodiment of this application, the propeller is disposed in a position below the corresponding motor, that is, the motor is inverted, open space above the motor may be reserved for placing another component such as the antenna, and the antenna is disposed in a position above the motor and opposite to the motor. This satisfies an arrangement requirement of the component of the unmanned aerial vehicle, prevents the antenna from being blocked during the flight of the unmanned aerial vehicle, and can ensure normal operation of the antenna and improve product reliability. In addition, an arrangement requirement of the antenna of the unmanned aerial vehicle can be satisfied without adding an additional structure such as an antenna support. Therefore, the antenna can be arranged in a highly integrated manner, the weight of the unmanned aerial vehicle can be lighter, flight duration is longer, and the unmanned aerial vehicle has fewer folding steps and a higher storage speed.

In addition, the unmanned aerial vehicle in the technical solution provided by this application may further have the following additional technical features.

In the foregoing technical solution, preferably, there are a plurality of arms, the plurality of arms is distributed along a circumferential direction of the central body, and the quantity of motor(s) is equal to the quantity of propeller(s).

In this technical solution, the plurality of arms is specifically defined as being peripherally disposed relative to the central body, and a motor and a propeller are disposed on each arm. Therefore, propellers located in different directions may be coordinated and controlled to control flight of the unmanned aerial vehicle conveniently.

In any one of the foregoing technical solutions, preferably, a spacing between two adjacent motors is greater than a diameter of a propeller disk of any one of the propellers.

In this technical solution, the spacing between two adjacent motors is a spacing between rotation centers of two corresponding adjacent propellers. The spacing is defined as being greater than the diameter of the propeller disk of any one of the propellers. This can ensure that two adjacent propellers do not mutually collide in a rotation process, reserve sufficient rotation space for each other, and ensure reliable operation of the unmanned aerial vehicle. Specifically, each propeller of a same unmanned aerial vehicle usually has a same diameter of swept range, and when there is a difference, a largest diameter of the swept range may prevail preferentially. Alternatively, a spacing between two adjacent motors may be defined as being greater than a sum of radii of propeller disks of two corresponding propellers.

In any one of the foregoing technical solutions, preferably, a preset spacing exists between propeller disks of the propellers.

In this technical solution, a relationship between the spacing between two adjacent motors and a size of the propeller disk is not specifically defined, but the existing preset spacing between the propeller disks of the propellers is directly defined. Regardless of whether diameters of the propeller disks of the propellers are the same, positions of the propellers are correspondingly adjusted, to ensure that the preset spacing exists between the propeller disks. This ensures that the propellers do not mutually collide in a rotation process, reserves sufficient rotation space for each other, and ensures reliable operation of the unmanned aerial vehicle.

In any one of the foregoing technical solutions, preferably, the propeller disks of the propellers avoid the central body, the arm, and the motor.

In this technical solution, the propeller disk formed by rotation of the propeller is a virtual structure, and represents a rotation space of the propeller. By further defining the swept range that avoids the central body, the arm, and the motor, it can be ensured that the propeller does not interfere with a nearby structure when the propeller is located on a top of the motor. This avoids a collision and ensures reliable operation of the unmanned aerial vehicle. Optionally, a shape of the arm may be optimized so that the arm avoids the propeller disk. For example, the arm is disposed in a bending shape that protrudes upward. Alternatively, the arm is oblique downward; or an included angle between an axis of rotation of the propeller and the arm may be adjusted; or the arm may be prolonged so that the propeller disk avoids the central body.

In any one of the foregoing technical solutions, preferably, the antenna is located above the motor.

In this technical solution, the antenna is further defined as being disposed above the motor, that is, the motor provides a mounting position for the antenna. This ensures reliable mounting of the antenna.

In any one of the foregoing technical solutions, preferably, the antenna includes a positioning antenna and a communication antenna.

In this technical solution, it is specifically defined that the antenna disposed on the top of the motor includes a positioning antenna and a communication antenna respectively configured to determine a location of the unmanned aerial vehicle and transmit data between the unmanned aerial vehicle and a ground control terminal. The positioning antenna and the communication antenna have a high requirement for non-blocking. Preferentially disposing the positioning antenna and the communication antenna on the top of the motor can ensure normal operation of the positioning antenna and the communication antenna and improve product reliability. In addition, no additional antenna support needs to be disposed for the unmanned aerial vehicle. Therefore, the weight of the unmanned aerial vehicle can be lighter, flight duration is longer, and the unmanned aerial vehicle has fewer folding steps and a higher storage speed.

In any one of the foregoing technical solutions, preferably, there are at least four arms; and the antenna includes two positioning antennas and two communication antennas, and one of the positioning antennas or one of the communication antennas is disposed above the motor.

In this technical solution, it is further defined that the antenna includes two positioning antennas and two communication antennas. Correspondingly, there are at least four arms. In this case, each antenna may be independently disposed on one motor. This avoids mutual impact caused by an excessively short spacing between antennas and ensures product reliability.

In any one of the foregoing technical solutions, preferably, the positioning antennas are real-time differential positioning antennas, and a spacing between central points of the two real-time differential positioning antennas is greater than or equal to 30 cm.

In this technical solution, the positioning antennas are specifically defined as real-time differential positioning antennas. Centimeter-level positioning accuracy can be obtained outdoors in real time. This can satisfy a high-accuracy positioning requirement and expand an application scope of the unmanned aerial vehicle. The real-time differential positioning antenna has a high arrangement requirement. A connection line between the central points of the two real-time differential positioning antennas is a baseline. The baseline is required to be at least 30 cm, that is, the spacing between the central points of the two real-time differential positioning antennas needs to be at least 30 cm. Correspondingly, a spacing between central points of motors to which the two real-time differential positioning antennas are connected may be greater than or equal to 30 cm. In addition, the real-time differential positioning antenna further needs to be disposed upward, and a radiation angle of the real-time differential positioning antenna in a horizontal plane needs to reach 150°. Connecting the real-time differential positioning antenna to the top of the motor can satisfy the foregoing arrangement requirement and ensure normal operation of the real-time differential positioning antenna.

In any one of the foregoing technical solutions, preferably, the unmanned aerial vehicle further includes a photographing apparatus connected to a bottom of the central body, where a lens of the photographing apparatus faces toward a front direction, and the two communication antennas are located in front of the central body.

In this technical solution, arrangement positions of the communication antennas need to ensure integrity of directivity diagrams of the communication antennas, that is, no other blocking structure exists within coverage of the directivity diagrams. Because the lens of the photographing apparatus of the unmanned aerial vehicle faces toward the front direction, and the communication antennas are disposed in front of the central body and correspond to the two front arms, integrity of the directivity diagrams of the communication antennas can be ensured, and smooth communication with the ground control terminal can be maintained. Specifically, there are four arms, the communication antennas are located in positions above the motors of the two front arms, and the positioning antennas are located in positions above the motors of the two rear arms. Further, the bottom of the central body is further connected to a foot support for supporting. In the related art, communication antennas are disposed in positions below motors of two front arms. The communication antennas are not blocked when an unmanned aerial vehicle flies forward (that is, the unmanned aerial vehicle flies toward the ground control terminal with its front facing toward a ground control terminal), but the communication antennas are blocked when the unmanned aerial vehicle flies backward (that is, the unmanned aerial vehicle flies in a direction away from the ground control terminal with its front facing away from the ground control terminal).

In any one of the foregoing technical solutions, preferably, the communication antennas are software-defined radio antennas.

In this technical solution, the communication antennas are specifically defined as software-defined radio antennas (Software Definition Radio, SDR antenna), and may be upgraded by downloading and updating software, without completely replacing hardware. This helps reduce subsequent product maintenance costs. The communication antennas may be used for multi-mode, multi-frequency, and multi-function wireless communication, featuring a wide application scope. Therefore, product adaptability is improved. Optionally, the communication antennas use 2T2R (T represents transmit, and R represents receive) antennas.

The additional aspects and advantages of this application become more apparent in the following description, or are learned through practice of this application.

### BRIEF DESCRIPTION OF THE DRAWINGS

The foregoing and/or additional aspects and advantages of this application will become more apparent and comprehensible in the description of the embodiments in combination with the accompanying drawings.
FIG. 1 is a schematic structural diagram of an unmanned aerial vehicle according to an embodiment of this application;
FIG. 2 is a main view of an unmanned aerial vehicle according to an embodiment of this application; and
FIG. 3 is a bottom view of an unmanned aerial vehicle according to an embodiment of this application.

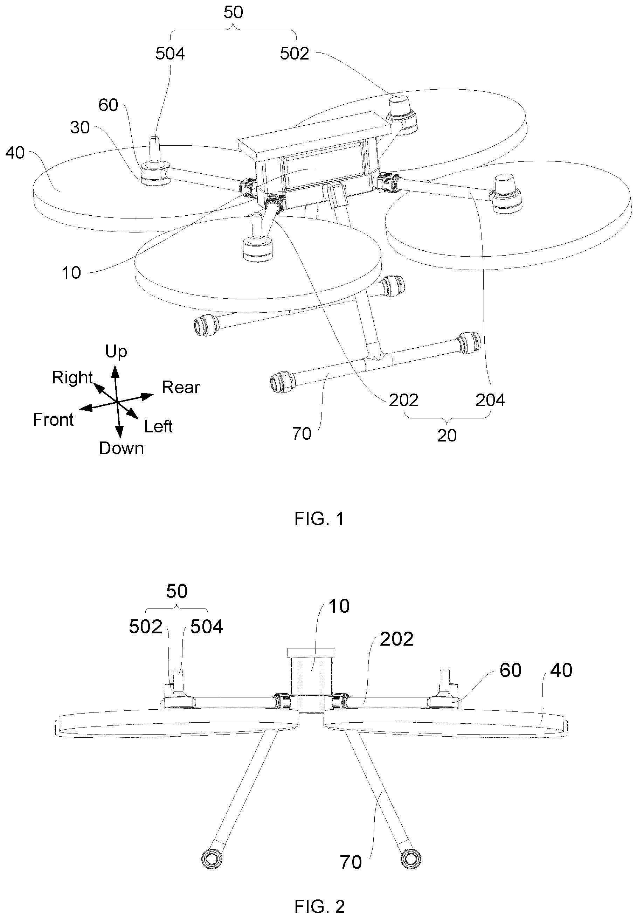

A correspondence between reference numerals and names of components in FIG. 1 to FIG. 3 is as follows:
10: central body; 20: arm; 202: front arm; 204: rear arm; 30: motor; 40: propeller disk; 50: antenna; 502: real-time differential positioning antenna; 504: software-defined radio antenna; 60: motor mounting base; and 70: foot support.

### DETAILED DESCRIPTION OF THE DRAWINGS

To make the objective, features, and advantages of this application more comprehensible, the following further describes this application in detail with reference to accompanying drawings and specific embodiments. It should be noted that under a condition that no conflict occurs, the embodiments of this application and features in the embodiments may be mutually combined.

A plurality of specific details is described in the following description for fully understanding this application. However, this application may be further implemented in other manners different from this described herein. Therefore, the protection scope of this application is not limited by the following disclosed specific embodiments.

The following describes the unmanned aerial vehicle according to some embodiments of this application with reference to FIG. 1 to FIG. 3.

As shown in FIG. 1, an embodiment of an aspect of this application provides an unmanned aerial vehicle, including a central body 10, a plurality of arms 20, a plurality of motors 30, a plurality of propellers (a propeller disk 40 shown in FIG. 1 is a virtual disk-like structure formed by rotation of a propeller), and a plurality of antennas 50. The plurality of arms 20 are connected to the central body 10, a motor mounting base 60 is disposed at one end of each arm 20 away from the central body 10, and the motor mounting base 60 includes a top and a bottom that is opposite to the top. The plurality of motors 30 are mounted on the motor mounting bases 60 of the plurality of arms 20, respectively. The plurality of propellers is connected to the plurality of motors 30, respectively, and the motors 30 are configured to drive the propellers to rotate, to provide power for the unmanned aerial vehicle for flying. The plurality of antennas 50 is disposed on the motor mounting bases 60 of at least two arms 20 in the plurality of arms 20, respectively, the antenna 50 being located on the top of the motor mounting base 60, where the propeller is located in a position below the motor mounting base 60, and the antenna 50 is located in a position above the motor mounting base 60.

In the unmanned aerial vehicle provided by this embodiment of this application, the motor mounting base 60 is disposed at one end of the arm 20 away from the central body 10. The motor mounting base 60, on one hand, may be configured to mount the motor 30 for driving the propeller, and on the other hand, may provide a stable mounting position for the antenna 50. Specifically, the antenna 50 is mounted on the top of the motor mounting base 60 and is located in a position above the motor mounting base 60, and the propeller is located in a position below the motor mounting base 60. This can ensure open space for mounting the antennas 50 without adding an additional structure, make the antenna 50 less blocked by a structure such as a propeller, and reduce the weight of the unmanned aerial vehicle, so that the unmanned aerial vehicle has longer flight duration, fewer folding steps, and a higher storage speed. Specifically, the motor 30 is mounted on the motor mounting base 60, and its specific mounting position is not limited. For example, the motor 30 may be located at one end of the motor mounting base 60 that is farthest away from the central body 10. The propeller is connected to the motor 30, as long as it is ensured that the propeller is located in a position below the motor mounting base 60.

In some embodiments, the antenna 50 includes at least one of the following: a communication antenna, a positioning antenna, and a ranging antenna.

In this embodiment, the antenna 50 specifically includes at least one of a communication antenna, a positioning antenna, and a ranging antenna. The communication antenna is configured to exchange data with the outside, the positioning antenna is configured to obtain location information of the unmanned aerial vehicle, and the ranging antenna is configured to detect a distance between the unmanned aerial vehicle and a nearby obstacle. Making the antenna 50 less blocked can ensure normal operation of the antenna 50 and facilitate reliable flight of the unmanned aerial vehicle.

In some embodiments, the antenna 50 includes a communication antenna.

In this embodiment, the antenna 50 specifically includes a communication antenna for exchanging data with the outside. Because the communication antenna is located in a position above the motor mounting base 60, normal operation of the communication antenna can be ensured, and product reliability is improved. In addition, an arrangement requirement of the communication antenna of the unmanned aerial vehicle can be satisfied without adding an additional structure. Therefore, the communication antenna can be arranged in a highly integrated manner, and a fuselage weight is also reduced, so that flight duration of the unmanned aerial vehicle is longer and that the unmanned aerial vehicle has fewer folding steps and a higher storage speed. Specifically, the communication antenna is a software-defined radio antenna 504, and may be upgraded by downloading and updating software, without completely replacing hardware. This helps reduce subsequent product maintenance costs. The communication antenna may be used for multi-mode, multi-frequency, and multi-function wireless communication, featuring a wide application scope. Therefore, product adaptability is improved. Optionally, the communication antenna uses a 2T2R antenna.

As shown in FIG. 1, in some embodiments, the plurality of arms 20 include a front arm 202, and the communication antenna is disposed on a motor mounting base 60 of the front arm 202.

In this embodiment, an arrangement position of the communication antenna needs to ensure integrity of a directivity diagram of the communication antenna, that is, no other blocking structure exists within coverage of the directivity diagram. Because the communication antenna is disposed on the motor mounting base 60 of the front arm 202, integrity of the directivity diagram of the communication antenna can be ensured, and smooth communication can be maintained.

As shown in FIG. 1, in some embodiments, there are a plurality of communication antennas, and the plurality of communication antennas are located on two sides of a roll axis of the unmanned aerial vehicle, respectively.

In this embodiment, there are specifically a plurality of communication antennas, and this helps improve communication capability of the unmanned aerial vehicle. The roll axis is an axis of rotation when the unmanned aerial vehicle rolls left and right (that is, an axis that extends along front and rear directions of the unmanned aerial vehicle). The plurality of communication antennas is located on the two sides of the roll axis of the unmanned aerial vehicle, respectively. This can ensure basically equal strength of communication signals in left and right directions of the unmanned aerial vehicle and ensure normal communication of the unmanned aerial vehicle.

As shown in FIG. 1, in some embodiments, the plurality of communication antennas is symmetrically disposed relative to the roll axis of the unmanned aerial vehicle.

In this embodiment, the plurality of communication antennas is further defined as being symmetrically disposed relative to the roll axis of the unmanned aerial vehicle. This not only enhances equal strength of communication signals in the left and right directions of the unmanned aerial vehicle, but also enables even weight distribution of the unmanned aerial vehicle and helps ensure flight attitude balance of the unmanned aerial vehicle.

In some embodiments, as shown in FIG. 1, the plurality of arms 20 include a front arm 202 and a rear arm 204 that is opposite to the front arm 202, a part of the communication antennas are disposed on a motor mounting base 60 of the front arm 202, and another part of the communication antennas are disposed on a motor mounting base 60 of the rear arm 204.

In this embodiment, disposing all the communication antennas separately on the front arm 202 and the rear arm 204 can expand signal coverage of the communication antennas, ensure that complete directivity diagrams can be obtained in both front and rear directions of the communication antennas, and help enhance communication reliability of the unmanned aerial vehicle.

In some embodiments, there are a plurality of communication antennas, and the plurality of communication antennas are located on two sides of a pitch axis of the unmanned aerial vehicle, respectively.

In this embodiment, there are specifically a plurality of communication antennas, and this helps improve communication capability of the unmanned aerial vehicle. The pitch axis is an axis of rotation when the unmanned aerial vehicle raises or lowers its head (that is, an axis that extends along left and right directions of the unmanned aerial vehicle). The plurality of communication antennas is located on the two sides of the pitch axis of the unmanned aerial vehicle, respectively. This can ensure basically equal strength of communication signals in front and rear directions of the unmanned aerial vehicle and ensure normal communication of the unmanned aerial vehicle.

In some embodiments, the plurality of communication antennas is symmetrically disposed relative to the pitch axis of the unmanned aerial vehicle.

In this embodiment, the plurality of communication antennas is further defined as being symmetrically disposed relative to the pitch axis of the unmanned aerial vehicle. This not only enhances equal strength of communication signals in the front and rear directions of the unmanned aerial vehicle, but also enables even weight distribution of the unmanned aerial vehicle and helps ensure flight attitude balance of the unmanned aerial vehicle.

As shown in FIG. 1 and FIG. 2, in some embodiments, there are a plurality of communication antennas, and the plurality of communication antennas are at a same level relative to the central body 10.

In this embodiment, there are specifically a plurality of communication antennas, and this helps improve communication capability of the unmanned aerial vehicle. Because the plurality of communication antennas is at the same level relative to the central body 10, a structure of the unmanned aerial vehicle is more compact, and this helps reduce the possibility of the communication antennas being damaged by an external force.

In some embodiments, there are a plurality of communication antennas, and the plurality of communication antennas are symmetrically disposed relative to the central body 10.

In this embodiment, there are specifically a plurality of communication antennas, and this helps improve communication capability of the unmanned aerial vehicle. The plurality of communication antennas is symmetrically disposed relative to the central body 10. This not only enhances equal strength of communication signals of the unmanned aerial vehicle in a circumferential direction of the central body 10, but also enables even weight distribution of the unmanned aerial vehicle and helps ensure flight attitude balance of the unmanned aerial vehicle.

In some embodiments, the unmanned aerial vehicle further includes a conducting wire electrically connected to the communication antenna, the arm 20 is a hollow-tubular structure, and the conducting wire is electrically connected to a control circuit of the central body 10 via the arm 20 after the conducting wire passes through the motor mounting base 60.

In this embodiment, the communication antenna is electrically connected to the control circuit of the central body 10 by the conducting wire. This can ensure stability and reliability of data exchange between the communication antenna and the control circuit during the flight. The conducting wire specifically passes through the motor mounting base 60 and the hollow-tubular arm 20 and extends to the control circuit of the central body 10, so that the motor mounting base 60, the arm 20, and the central body 10 can wrap the conducting wire. This, on one hand, further improves protection for the conducting wire, and on the other hand, can make an exterior of the unmanned aerial vehicle simple.

In some embodiments, the communication antenna is a line-of-sight communication antenna.

In this embodiment, the communication antenna is specifically a line-of-sight communication antenna. A radio signal needs to be propagated in a straight line between a transmitting end and a receiving end without being blocked, and a radio frequency thereof is between 10 GHz and 66 GHz. Because the line-of-sight communication antenna is disposed in open space above the motor mounting base 60, signal blocking can be reduced for the communication antenna, and normal operation of the communication antenna is ensured.

In some embodiments, the communication antenna is a Wi-Fi (Wireless Fidelity, wireless local area network) antenna.

In this embodiment, the communication antenna is further defined as a Wi-Fi antenna. This can enhance signal strength of the wireless network and improve reliability of communication.

In some embodiments, the communication antenna is configured to receive a control signal sent by a ground control terminal, and send, to the ground control terminal, sensing data of a sensor carried by the unmanned aerial vehicle.

In this embodiment, the communication antenna is specifically configured to exchange data with the ground control terminal. On one hand, the communication antenna may receive the control signal to control operation of the unmanned aerial vehicle based on the control signal. On the other hand, the communication antenna may send the sensing data of the sensor. When the sensing data is an operation parameter of the unmanned aerial vehicle, the ground control terminal can conveniently know an operation status of the unmanned aerial vehicle in time, and further perform a corresponding control operation. This can ensure reliable control by the ground control terminal over the unmanned aerial vehicle and improve safety of operation.

In some embodiments, the sensor is an image sensor, and the sensing data is image information.

In this embodiment, the sensor is specifically an image sensor, and the sensing data is specifically image information. In other words, a user may configure an image sensor on the unmanned aerial vehicle, and collect specific image information by virtue of a flight capability of the unmanned aerial vehicle, and the image information is transmitted back to the ground control terminal via the communication antenna. Therefore, an image collection range is expanded.

In some embodiments, the communication antenna is disposed obliquely to or in parallel with a yaw axis of the unmanned aerial vehicle.

In this embodiment, the yaw axis is an axis of rotation when the unmanned aerial vehicle adjusts a course (that is, an axis that extends along up and down directions of the unmanned aerial vehicle). Disposing the communication antenna obliquely to or in parallel with the yaw axis can ensure that the communication antenna has a trend of extending to an upper open space, and this helps ensure integrity of a directivity diagram of the communication antenna.

In some embodiments, the communication antenna is disposed vertically to the top of the motor mounting base 60.

In this embodiment, the communication antenna is specifically defined as being disposed vertically to the top of the motor mounting base 60. This can ensure equal strength of communication of the communication antenna in a circumferential direction of the motor mounting base 60.

In some embodiments, the communication antenna is disposed obliquely to the top of the motor mounting base 60.

In this embodiment, the communication antenna is specifically defined as being disposed obliquely to the top of the motor mounting base 60. The communication antenna may be away from other structures of the unmanned aerial vehicle based on a requirement, so that the communication antenna is less blocked.

In some embodiments, the antenna includes a positioning antenna.

In this embodiment, the antenna specifically includes a positioning antenna for obtaining location information of the unmanned aerial vehicle. Because the positioning antenna is located in a position above the motor mounting base 60, normal operation of the positioning antenna can be ensured, and product reliability is improved. In addition, an arrangement requirement of the positioning antenna of the unmanned aerial vehicle can be satisfied without adding an additional structure. Therefore, the positioning antenna can be arranged in a highly integrated manner, and a fuselage weight is also reduced, so that flight duration of the unmanned aerial vehicle is longer and that the unmanned aerial vehicle has fewer folding steps and a higher storage speed. Specifically, the positioning antenna is a real-time differential positioning antenna 502. Centimeter-level positioning accuracy can be obtained outdoors in real time. This can satisfy a high-accuracy positioning requirement and expand an application scope of the unmanned aerial vehicle.

In some embodiments, the plurality of arms 20 include a front arm 202, and the positioning antenna is disposed on a motor mounting base 60 of the front arm 202.

In this embodiment, arranging the positioning antenna on the motor mounting base 60 of the front arm 202 can make the positioning antenna less blocked by a front structure and ensure accurate positioning.

As shown in FIG. 1, in some embodiments, the plurality of arms 20 include a rear arm 204, and the positioning antenna is disposed on a motor mounting base 60 of the rear arm 204.

In this embodiment, arranging the positioning antenna on the motor mounting base 60 of the rear arm 204 can make the positioning antenna less blocked by a rear structure, ensure accurate positioning, and further reserve a front arm 202 for another structure requiring front open space, such as a communication antenna.

As shown in FIG. 1, in some embodiments, there are a plurality of positioning antennas, and the plurality of positioning antennas are located on two sides of a roll axis of the unmanned aerial vehicle, respectively.

In this embodiment, there are specifically a plurality of positioning antennas, and the plurality of positioning antennas are located on the two sides of the roll axis of the unmanned aerial vehicle, respectively. This can increase spacings between the plurality of positioning antennas, increase radiation angles of the positioning antennas in a horizontal plane, and help improve positioning accuracy of the unmanned aerial vehicle.

As shown in FIG. 1, in some embodiments, the plurality of positioning antennas is symmetrically disposed relative to the roll axis of the unmanned aerial vehicle.

In this embodiment, the plurality of positioning antennas is further defined as being symmetrically disposed relative to the roll axis of the unmanned aerial vehicle. This not only enhances positioning accuracy of the unmanned aerial vehicle, but also enables even weight distribution of the unmanned aerial vehicle and helps ensure flight attitude balance of the unmanned aerial vehicle.

In some embodiments, the plurality of arms 20 include a front arm 202 and a rear arm 204 that is opposite to the front arm 202, a part of the positioning antennas are disposed on a motor mounting base 60 of the front arm 202, and another part of the positioning antennas are disposed on a motor mounting base 60 of the rear arm 204.

In this embodiment, disposing all the positioning antennas separately on the front arm 202 and the rear arm 204 can make the positioning antennas less blocked by nearby front and rear structures and ensure accurate positioning.

In some embodiments, there are a plurality of positioning antennas, and the plurality of positioning antennas are located on two sides of a pitch axis of the unmanned aerial vehicle, respectively.

In this embodiment, there are specifically a plurality of communication antennas, and the plurality of positioning antennas are located on the two sides of the pitch axis of the unmanned aerial vehicle, respectively. This can increase spacings between the plurality of positioning antennas, increase radiation angles of the positioning antennas in a horizontal plane, and help improve positioning accuracy of the unmanned aerial vehicle.

In some embodiments, the plurality of positioning antennas is symmetrically disposed relative to the pitch axis of the unmanned aerial vehicle.

In this embodiment, the plurality of positioning antennas is further defined as being symmetrically disposed relative to the pitch axis of the unmanned aerial vehicle. This not only enhances positioning accuracy of the unmanned aerial vehicle, but also enables even weight distribution of the unmanned aerial vehicle and helps ensure flight attitude balance of the unmanned aerial vehicle.

As shown in FIG. 1 and FIG. 2, in some embodiments, there are a plurality of positioning antennas, and the plurality of positioning antennas are at a same level relative to the central body 10.

In this embodiment, there are specifically a plurality of communication antennas, and this helps enhance positioning accuracy of the unmanned aerial vehicle. Because the plurality of positioning antennas is at the same level relative to the central body 10, a structure of the unmanned aerial vehicle is more compact, and this helps reduce the possibility of the positioning antennas being damaged by an external force.

In some embodiments, there are a plurality of positioning antennas, and the plurality of positioning antennas are symmetrically disposed relative to the central body 10.

In this embodiment, there are specifically a plurality of communication antennas, and the plurality of communication antennas are symmetrically disposed relative to the central body 10. This not only helps enhance positioning accuracy of the unmanned aerial vehicle, but also enables even weight distribution of the unmanned aerial vehicle and helps ensure flight attitude balance of the unmanned aerial vehicle.

In some embodiments, the positioning antenna is configured to receive a positioning signal from a satellite.

In this embodiment, the positioning antenna not directly used for positioning, but used for receiving a positioning signal from a satellite is specifically defined. This can reduce the amount of calculation and consumption of calculation time and help prolong flight duration.

In some embodiments, there are two positioning antennas, and a spacing between the two positioning antennas is greater than 30 cm.

In this embodiment, there are specifically two positioning antennas. Location information may be obtained through calculation with reference to data collected by the two positioning antennas. Defining the spacing between the two positioning antennas as being greater than 30 cm can satisfy a calculation requirement of the positioning antenna and help improve positioning accuracy.

In some embodiments, the unmanned aerial vehicle further includes a conducting wire electrically connected to the positioning antenna, the arm 20 is a hollow-tubular structure, and the conducting wire is electrically connected to a control circuit of the central body 10 via the arm 20 after the conducting wire passes through the motor mounting base 60.

In this embodiment, the positioning antenna is electrically connected to the control circuit of the central body 10 by the conducting wire. This can ensure stability and reliability of data exchange between the positioning antenna and the control circuit during the flight. The conducting wire specifically passes through the motor mounting base 60 and the hollow-tubular arm 20 and extends to the control circuit of the central body 10, so that the motor mounting base 60, the arm 20, and the central body 10 can wrap the conducting wire. This, on one hand, further improves protection for the conducting wire, and on the other hand, can make an exterior of the unmanned aerial vehicle simple.

As shown in FIG. 2, in some embodiments, an axis of rotation of the motor 30 is disposed obliquely to a yaw axis of the unmanned aerial vehicle.

In this embodiment, the axis of rotation of the motor 30 is defined as being disposed obliquely to the yaw axis of the unmanned aerial vehicle, so that a tilt of the propeller can also be generated. This helps the propeller disk 40 of the propeller avoid another structure, and ensures safe operation of the unmanned aerial vehicle.

In some embodiments, the positioning antenna is disposed obliquely to or in parallel with the yaw axis of the unmanned aerial vehicle.

In this embodiment, the positioning antenna needs to be disposed upward in arrangement. Because the positioning antenna located on the top of the motor mounting base 60 is disposed obliquely to or in parallel with the yaw axis, it can be ensured that an arrangement requirement of the positioning antenna is satisfied, and accurate positioning is ensured.

In some embodiments, the positioning antenna is disposed vertically to the top of the motor mounting base 60.

In this embodiment, the positioning antenna is specifically defined as being disposed vertically to the top of the motor mounting base 60. This can ensure equal signal strength of the positioning antenna in a circumferential direction of the motor mounting base 60.

In some embodiments, the positioning antenna is disposed obliquely to the top of the motor mounting base 60.

In this embodiment, the positioning antenna is specifically defined as being disposed obliquely to the top of the motor mounting base 60. The positioning antenna may be away from other structures of the unmanned aerial vehicle based on a requirement, so that the positioning antenna is less blocked.

In some embodiments, the arm 20 is rotatably connected or fixedly connected to the central body 10.

In this embodiment, when the arm 20 is rotatably connected to the central body 10, the arm 20 may be rotated based on a requirement of the antenna, to adjust an antenna angle at any time and ensure that the antenna is not blocked. When the arm 20 is fixedly connected to the central body 10, stability and reliability of the connection can be fully ensured.

As shown in FIG. 1, an embodiment of another aspect of this application provides an unmanned aerial vehicle, including a central body 10, an arm 20, a motor 30, a propeller (a propeller disk 40 shown in FIG. 1 is a virtual disk-like structure formed by rotation of the propeller), and an antenna 50. The arm 20 is connected to the central body 10. The motor 30 is connected to one end of the arm 20 away from the central body 10. The propeller is connected to the motor 30, and the motor 30 is configured to drive the propeller to rotate, to provide power for flying. The antenna 50 is connected to the end of the arm 20 away from the central body 10, and disposed opposite to the motor 30. The antenna 50 is located in a position above the motor 30, and the propeller is located in a position below the motor 30.

In the unmanned aerial vehicle provided by this embodiment of this application, the propeller is disposed in a position below the corresponding motor 30, that is, the motor 30 is inverted, open space above the motor 30 may be reserved for placing another component such as the antenna 50, and the antenna 50 is disposed in a position above the motor 30 and opposite to the motor 30. This satisfies an arrangement requirement of the component of the unmanned aerial vehicle, prevents the antenna 50 from being blocked during the flight of the unmanned aerial vehicle, and can ensure normal operation of the antenna 50 and improve product reliability. In addition, an arrangement requirement of the antenna of the unmanned aerial vehicle can be satisfied without adding an additional structure such as an antenna support. Therefore, the antenna 50 can be arranged in a highly integrated manner, the weight of the unmanned aerial vehicle can be lighter, flight duration is longer, and the unmanned aerial vehicle has fewer folding steps and a higher storage speed.

As shown in FIG. 1, in some embodiments, there are a plurality of arms 20, the plurality of arms 20 are distributed along a circumferential direction of the central body 10, and the quantity of motors 30 is equal to the quantity of propellers.

In this embodiment, the plurality of arms 20 are specifically defined as being disposed along the circumferential direction of the central body 10, and a motor 30 and a propeller are disposed on each arm 20. Therefore, propellers located in different directions may be coordinated and controlled to control flight of the unmanned aerial vehicle conveniently.

In some embodiments, a spacing between two adjacent motors 30 is greater than a diameter of a propeller disk 40 of any one of the propellers.

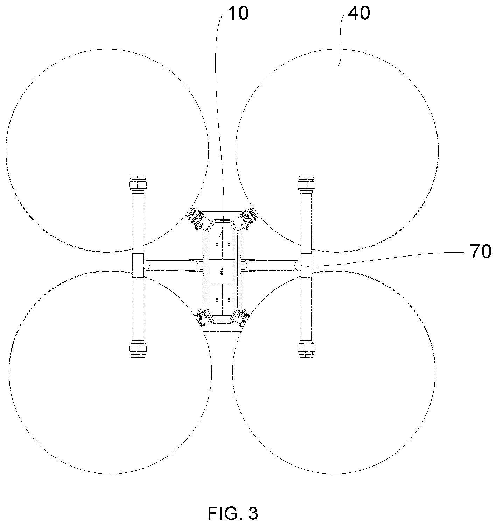

In this embodiment, the spacing between two adjacent motors 30 is a spacing between rotation centers of two corresponding adjacent propellers. The spacing is defined as being greater than the diameter of the propeller disk of any one of the propellers, and as shown in FIG. 3, a spacing exists between two adjacent propeller disks 40. This can ensure that two adjacent propellers do not mutually collide in a rotation process, reserve sufficient rotation space for each other, and ensure reliable operation of the unmanned aerial vehicle. Specifically, each propeller of a same unmanned aerial vehicle usually has a same diameter of swept range, and when there is a difference, a largest diameter of the swept range may prevail preferentially. Alternatively, a spacing between two adjacent motors 30 may be defined as being greater than a sum of radii of propeller disks 40 of two corresponding propellers.

As shown in FIG. 3, in some embodiments, a preset spacing exists between propeller disks 40 of the propellers.

In this embodiment, a relationship between the spacing between two adjacent motors 30 and a size of the propeller disk 40 is not specifically defined, but the existing preset spacing between the propeller disks 40 of the propellers is directly defined. Regardless of whether diameters of the propeller disks of the propellers are the same, positions of the propellers are correspondingly adjusted, to ensure that the preset spacing exists between the propeller disks 40. This ensures that the propellers do not mutually collide in a rotation process, reserves sufficient rotation space for each other, and ensures reliable operation of the unmanned aerial vehicle.

As shown in FIG. 1 and FIG. 2, in some embodiments, the propeller disks 40 of the propellers avoid the central body 10, the arm 20, and the motor 30.

In this embodiment, the propeller disk 40 formed by rotation of the propeller is a virtual structure, and represents rotation space of the propeller. By further defining the propeller disk 40 that avoids the central body 10, the arm 20, and the motor 30, it can be ensured that the propeller does not interfere with a nearby structure when the propeller is located on a top of the motor 30. This avoids a collision and ensures reliable operation of the unmanned aerial vehicle. Optionally, a shape of the arm 20 may be optimized so that the arm 20 avoids the propeller disk 40. For example, the arm 20 is disposed in a bending shape that protrudes upward. Alternatively, the arm 20 is oblique downward; or an included angle between an axis of rotation of the propeller and the arm 20 may be adjusted; or the arm 20 may be prolonged so that the propeller disk 40 avoids the central body 10.

In some embodiments, the antenna 50 is located above the motor 30.

In this embodiment, the antenna 50 is further defined as being disposed above the motor 30, that is, the motor 30 provides a mounting position for the antenna 50. This ensures reliable mounting of the antenna 50.

As shown in FIG. 1 and FIG. 2, in some embodiments, the antenna 50 includes a positioning antenna (such as a real-time differential positioning antenna 502) and a communication antenna (such as a software-defined radio antenna504).

In this embodiment, it is specifically defined that the antenna 50 disposed on the top of the motor 30 includes a positioning antenna and a communication antenna configured to determine a location of the unmanned aerial vehicle and transmit data between the unmanned aerial vehicle and a ground control terminal, respectively. The positioning antenna and the communication antenna have a high requirement for non-blocking. Preferentially disposing the positioning antenna and the communication antenna on the top of the motor 30 can ensure normal operation of the positioning antenna and the communication antenna and improve product reliability. In addition, no additional antenna support needs to be disposed for the unmanned aerial vehicle. Therefore, the weight of the unmanned aerial vehicle can be lighter, flight duration is longer, and the unmanned aerial vehicle has fewer folding steps and a higher storage speed.

As shown in FIG. 1, in some embodiments, there are at least four arms 20; and the antenna 50 includes two positioning antennas and two communication antennas, and one positioning antenna or one communication antenna is disposed above one motor 30.

In this embodiment, it is further defined that the antenna 50 includes two positioning antennas and two communication antennas. Correspondingly, there are at least four arms 20. In this case, each antenna 50 may be independently disposed on one motor 30. This avoids mutual impact caused by an excessively short spacing between different antennas 50 and ensures product reliability.

In some embodiments, the positioning antennas are real-time differential positioning antennas 502, and a spacing between central points of the two real-time differential positioning antennas 502 is greater than or equal to 30 cm.

In this embodiment, the positioning antennas are specifically defined as real-time differential positioning antennas 502. Centimeter-level positioning accuracy can be obtained outdoors in real time. This can satisfy a high-accuracy positioning requirement and expand an application scope of the unmanned aerial vehicle. The real-time differential positioning antenna 502 has a high arrangement requirement. A connection line between the central points of the two real-time differential positioning antennas 502 is a baseline. The baseline is required to be at least 30 cm, that is, the spacing between the central points of the two real-time differential positioning antennas 502 needs to be at least 30 cm. Correspondingly, a spacing between central points of motors 30 to which the two real-time differential positioning antennas 502 are connected may be greater than or equal to 30 cm. In addition, the real-time differential positioning antenna 502 further needs to be disposed upward, and a radiation angle of the real-time differential positioning antenna 502 in a horizontal plane needs to reach 150°. Connecting the real-time differential positioning antenna 502 to the top of the motor 30 can satisfy the foregoing arrangement requirement and ensure normal operation of the real-time differential positioning antenna 502.

In some embodiments, the unmanned aerial vehicle further includes a photographing apparatus connected to a bottom of the central body 10, where a lens of the photographing apparatus faces toward a front direction.

In this embodiment, the unmanned aerial vehicle is further configured with a photographing apparatus, which may be configured to capture an image during flight. This expands an application scope of the photographing apparatus. The lens of the photographing apparatus of the unmanned aerial vehicle faces toward the front direction. Two arms 20 in the direction are front arms 202, and two arms 20 in a rear direction are rear arms 204.

As shown in FIG. 1, in some embodiments, the two communication antennas are located in front of the central body 10.

In this embodiment, arrangement positions of the communication antennas need to ensure integrity of directivity diagrams of the communication antennas, that is, no other blocking structure exists within coverage of the directivity diagrams. Because the communication antennas are disposed in front of the central body 10 and correspond to the two front arms 202, integrity of the directivity diagrams of the communication antennas can be ensured, and smooth communication with the ground control terminal can be maintained. Specifically, as shown in FIG. 1, there are four arms 20, the communication antennas are located in positions above the motors 30 of the two front arms 202, and the positioning antennas are located in positions above the motors 30 of the two rear arms 204. Further, the bottom of the central body 10 is further connected to a foot support 70 for supporting. In the related art, communication antennas are disposed in positions below motors of two front arms. The communication antennas are not blocked when an unmanned aerial vehicle flies forward (that is, its front faces toward a ground control terminal, and the unmanned aerial vehicle flies toward the ground control terminal), but the communication antennas are blocked when the unmanned aerial vehicle flies backward (that is, its front faces away from the ground control terminal, and the unmanned aerial vehicle flies in a direction away from the ground control terminal).

In some embodiments, the communication antennas are software-defined radio antennas 504.

In this embodiment, the communication antennas are specifically defined as software-defined radio antennas 504, and may be upgraded by downloading and updating software, without completely replacing hardware. This helps reduce subsequent product maintenance costs. The communication antennas may be used for multi-mode, multi-frequency, and multi-function wireless communication, featuring a wide application scope. Therefore, product adaptability is improved. Optionally, the communication antennas use 2T2R antennas.

As described above, the motor 30 is inverted in this application, and may be configured to arrange the antenna 50 or another component, so that integrated arrangement of the antenna 50 is implemented. This avoids additional structure costs, simplifies folding steps of a fuselage, and reduces storage time.

In this application, the term "plurality" indicates two or more, unless otherwise expressly defined. The terms "mounted", "connected", "connection", "fixed", and the like should be understood in a broad sense. For example, "connection" may be a fixed connection, a detachable connection, or an integrated connection; and "connected" may be "directly connected" or may be "indirectly connected by using an intermediate medium. A person of ordinary skill in the art can understand specific meanings of these terms in this application based on specific situations.

In the description of this specification, the description of the terms "one embodiment", "some embodiments", "specific embodiments", and the like means that specific features, structures, materials, or characteristics described with reference to the embodiment(s) or examples are included in at least one embodiment or example of this application. In this specification, a schematic representation of the foregoing terms does not necessarily refer to a same embodiment or a same example. In addition, the described specific features, structures, materials, or characteristics may be combined in one or more embodiments or examples in an appropriate manner.

The foregoing descriptions are only preferred embodiments of this application, and not intended to limit this application. For a person skilled in the art, this application may be subject to various changes and variations. Any modifications, equivalent replacements, improvements, and the like made within the spirit and principle of this application shall fall within the protection scope of this application.

## Claims

1. An unmanned aerial vehicle, wherein the unmanned aerial vehicle comprises:
a central body;
a plurality of arms, connected to the central body, wherein a motor mounting base is disposed at an end of each arm away from the central body, and the motor mounting base includes a top and a bottom that is opposite to the top;
a plurality of motors, respectively mounted on the motor mounting bases of the plurality of arms;
a plurality of propellers, respectively connected to the plurality of motors, wherein the motors are configured to drive the propellers to rotate, to provide power for the unmanned aerial vehicle for flying; and
a plurality of antennas, respectively disposed on the motor mounting bases of at least two arms in the plurality of arms, the antenna being located on the top of the motor mounting base,
wherein the propeller is located in a position below the motor mounting base, and the antenna is located in a position above the motor mounting base.

2. The unmanned aerial vehicle according to claim 1, wherein the antenna includes at least one of the following: a communication antenna, a positioning antenna, or a ranging antenna.

3. The unmanned aerial vehicle according to claim 1, wherein the antenna includes a communication antenna.

4. The unmanned aerial vehicle according to claim 3, wherein the plurality of arms includes a front arm, and the communication antenna is disposed on a motor mounting base of the front arm.

5. The unmanned aerial vehicle according to claim 3, wherein there are a plurality of communication antennas, and the plurality of communication antennas are respectively located on two sides of a roll axis of the unmanned aerial vehicle.

6. The unmanned aerial vehicle according to claim 5, wherein the plurality of communication antennas is symmetrically disposed relative to the roll axis of the unmanned aerial vehicle.

7. The unmanned aerial vehicle according to claim 3, wherein the plurality of arms includes a front arm and a rear arm that is opposite to the front arm, a part of the communication antennas is disposed on a motor mounting base of the front arm, and another part of the communication antennas is disposed on a motor mounting base of the rear arm.

8. The unmanned aerial vehicle according to claim 3, wherein there are a plurality of communication antennas, and the plurality of communication antennas is respectively located on two sides of a pitch axis of the unmanned aerial vehicle.

9. The unmanned aerial vehicle according to claim 8, wherein the plurality of communication antennas is symmetrically disposed relative to the pitch axis of the unmanned aerial vehicle.

10. The unmanned aerial vehicle according to claim 3, wherein there is a plurality of communication antennas, and the plurality of communication antennas is at a same level relative to the central body.

11. The unmanned aerial vehicle according to claim 3, wherein there is a plurality of communication antennas, and the plurality of communication antennas is symmetrically disposed relative to the central body.

12. The unmanned aerial vehicle according to claim 3, wherein the unmanned aerial vehicle further comprises a conducting wire electrically connected to the communication antenna, the arm is a hollow-tubular structure, and the conducting wire is electrically connected to a control circuit of the central body via the arm after the conducting wire passes through the motor mounting base.

13. The unmanned aerial vehicle according to claim 3, wherein the communication antenna is a line-of-sight communication antenna.

14. The unmanned aerial vehicle according to claim 13, wherein the communication antenna is a Wi-Fi antenna.

15. The unmanned aerial vehicle according to claim 3, wherein the communication antenna is configured to receive a control signal sent by a ground control terminal, and send, to the ground control terminal, sensing data of a sensor carried by the unmanned aerial vehicle.

16. The unmanned aerial vehicle according to claim 15, wherein the sensor is an image sensor, and the sensing data is image information.

17. The unmanned aerial vehicle according to claim 3, wherein the communication antenna is disposed obliquely to or in parallel with a yaw axis of the unmanned aerial vehicle.

18. The unmanned aerial vehicle according to claim 3, wherein the communication antenna is disposed vertically to the top of the motor mounting base.

19. The unmanned aerial vehicle according to claim 3, wherein the communication antenna is disposed obliquely to the top of the motor mounting base.

20. The unmanned aerial vehicle according to claim 1, wherein the antenna includes a positioning antenna.

21. The unmanned aerial vehicle according to claim 20, wherein the plurality of arms includes a front arm, and the positioning antenna is disposed on a motor mounting base of the front arm.

22. The unmanned aerial vehicle according to claim 20, wherein there is a plurality of positioning antennas, and the plurality of positioning antennas is respectively located on two sides of a roll axis of the unmanned aerial vehicle.

23. The unmanned aerial vehicle according to claim 22, wherein the plurality of positioning antennas is symmetrically disposed relative to the roll axis of the unmanned aerial vehicle.

24. The unmanned aerial vehicle according to claim 20, wherein the plurality of arms includes a front arm and a rear arm that is opposite to the front arm, a part of the positioning antennas is disposed on a motor mounting base of the front arm, and another part of the positioning antennas is disposed on a motor mounting base of the rear arm.

25. The unmanned aerial vehicle according to claim 20, wherein there are a plurality of positioning antennas, and the plurality of positioning antennas are respectively located on two sides of a pitch axis of the unmanned aerial vehicle.

26. The unmanned aerial vehicle according to claim 25, wherein the plurality of positioning antennas is symmetrically disposed relative to the pitch axis of the unmanned aerial vehicle.

27. The unmanned aerial vehicle according to claim 20, wherein there is a plurality of positioning antennas, and the plurality of positioning antennas is at a same level relative to the central body.

28. The unmanned aerial vehicle according to claim 20, wherein there is a plurality of positioning antennas, and the plurality of positioning antennas is symmetrically disposed relative to the central body.

29. The unmanned aerial vehicle according to claim 20, wherein the positioning antenna is a real-time differential positioning antenna.

30. The unmanned aerial vehicle according to claim 20, wherein the positioning antenna is configured to receive a positioning signal from a satellite.

31. The unmanned aerial vehicle according to claim 20, wherein there are two positioning antennas, and a spacing between the two positioning antennas is greater than 30 cm.

32. The unmanned aerial vehicle according to claim 20, wherein the unmanned aerial vehicle further comprises a conducting wire electrically connected to the positioning antenna, the arm is a hollow-tubular structure, and the conducting wire is electrically connected to a control circuit of the central body via the arm after the conducting wire passes through the motor mounting base.

33. The unmanned aerial vehicle according to claim 20, wherein an axis of rotation of the motor is disposed obliquely to a yaw axis of the unmanned aerial vehicle, and the positioning antenna is disposed obliquely to or in parallel with the yaw axis of the unmanned aerial vehicle.

34. The unmanned aerial vehicle according to claim 20, wherein the positioning antenna is disposed vertically to the top of the motor mounting base.

35. The unmanned aerial vehicle according to claim 20, wherein the positioning antenna is disposed obliquely to the top of the motor mounting base.

36. The unmanned aerial vehicle according to claim 1, wherein the arm is rotatably connected or fixedly connected to the central body.

37. An unmanned aerial vehicle, wherein comprising:
a central body;
an arm, connected to the central body;
a motor, connected to an end of the arm away from the central body;
a propeller, connected to the motor, wherein the motor is configured to drive the propeller to rotate, to provide power for flying; and
an antenna, connected to the end of the arm away from the central body, and disposed opposite to the motor,
wherein the antenna is located in a position above the motor, and the propeller is located in a position below the motor.

38. The unmanned aerial vehicle according to claim 37, wherein there is a plurality of arms, the plurality of arms is distributed along a circumferential direction of the central body, and the motor and the propeller have the same quantity.

39. The unmanned aerial vehicle according to claim 38, wherein a spacing between two adjacent motors is greater than a diameter of a propeller disk of any one of the propellers.

40. The unmanned aerial vehicle according to claim 38, wherein a preset spacing exists between propeller disks of the propellers.

41. The unmanned aerial vehicle according to any one of claims 37 to 40, wherein the antenna is located above the motor.

42. The unmanned aerial vehicle according to claim 41, wherein the antenna includes a positioning antenna and a communication antenna.

43. The unmanned aerial vehicle according to claim 37, wherein there are at least four arms; and the antenna includes two positioning antennas and two communication antennas, and one of the positioning antennas or one of the communication antennas is disposed above the motor.

44. The unmanned aerial vehicle according to claim 43, wherein the positioning antennas are real-time differential positioning antennas, and a spacing between central points of the two real-time differential positioning antennas is greater than or equal to 30 cm.

45. The unmanned aerial vehicle according to claim 43, wherein the unmanned aerial vehicle further comprises a photographing apparatus connected to a bottom of the central body, wherein a lens of the photographing apparatus faces toward a front direction, and the two communication antennas are located in front of the central body.

46. The unmanned aerial vehicle according to claim 45, wherein the communication antennas are software-defined radio antennas.
